# NEUE EUROPÄISCHE PATENTSCHRIFT

(11) **EP 2 212 086 B2**
(45) Veröffentlichungstag und Bekanntmachung des Hinweises auf die Entscheidung über den Einspruch: **15.03.2023**
(45) Hinweis auf die Patenterteilung: 17.12.2014
(21) Anmeldenummer: 08802473.2
(22) Anmeldetag: 22.09.2008
(51) Int. Cl.: B29C 45/76, G01N 11/02, B29C 45/78, B29C 45/77

(54) **VERFAHREN UND VORRICHTUNG ZUM ÜBERWACHEN, DOKUMENTIEREN UND/ODER REGELN EINER SPRITZGIESSMASCHINE**
METHOD AND DEVICE FOR MONITORING, DOCUMENTING, AND/OR CONTROLLING AN INJECTION MOLDING MACHINE
PROCÉDÉ ET DISPOSITIF POUR SURVEILLER, DOCUMENTER ET/OU RÉGULER UNE PRESSE D'INJECTION

(30) Priorität: 20.09.2007 DE 102007045111
(43) Veröffentlichungstag der Anmeldung: 04.08.2010
(73) Patentinhaber: Priamus System Technologies AG, 8200 Schaffhausen (CH)
(72) Erfinder: BADER, Christopherus, CH-8413 Neftenbach (CH)
(74) Vertreter: Rentsch Partner AG
(86) Internationale Anmeldenummer: PCT/EP2008/007978
(87) Internationale Veröffentlichungsnummer: WO 2009/040077

(56) Entgegenhaltungen:
- WO-A1-98/19848
- WO-A1-02/081177
- DE-A1- 2 358 911
- DE-A1-102005 032 367
- DE-A1-102005 032 367
- JP-A- S 633 927
- JP-A- 6 320 587
- JP-A- S5 156 868
- JP-A- 10 323 874
- JP-A- H07 125 024
- JP-A- 2006 110 905
- US-A- 4 833 910
- US-A- 6 019 917
- US-A1- 2005 089 593

## Beschreibung

Die Erfindung betrifft ein Verfahren zum Überwachen, Dokumentieren und/oder Regeln einer Spritzgiessmaschine entsprechend dem Oberbegriff von Anspruch 1, sowie eine Spritzgiessmaschine zur Durchführung dieses Verfahrens.

### STAND DER TECHNIK

Zur Kontrolle der Konsistenz von plastischem Material, pastösen Massen, Emulsionen und auch Flüssigkeiten wird die Viskosität in Abhängigkeit vom Schergefälle bestimmt. Die Viskosität beschreibt dynamische Scherspannungen aufgrund der inneren Reibung in bewegten Flüssigkeiten oder in pastösen Massen. Die Definition der Viskosität geht auf den Ansatz von Newton zurück, welcher besagt, dass die Schubspannung proportional zum Schergefälle ist. Der Proportionalitätsfaktor wird dabei als Viskosität (Scherviskosität) bezeichnet. Die beiden Begriffe Schubspannung und Schergefälle lassen sich am Beispiel eines Flüssigkeitsfilms der Dicke d, der an einer Grenzfläche ruht und an der anderen mit einer Geschwindigkeit v aufgrund der darauf wirkenden Schubkraft bewegt wird, erklären. Die Schubspannung entspricht der Schubkraft pro Flächeneinheit und das Schergefälle entspricht dem Quotienten v/b und somit der Änderung der Verschiebungsgeschwindigkeit von der einen zur anderen Grenzfläche dividiert durch den Abstand zwischen den beiden Grenzflächen.

Um eine Beziehung zwischen dem Schergefälle und der Schubspannung respektive der Viskosität zu bestimmen, müssen für verschiedene Schergefälle Viskositätsmessungen durchgeführt werden. Die Viskosität kann nach dem Verfahren von Hagen/Poiseuille mittels einer Kapillare, die von der zu untersuchenden Flüssigkeit oder Masse aufgrund eines Beschickungsdruckes durchströmt wird, bestimmt werden. Aus der Durchflussmenge, dem Beschickungsdruck, der Druckänderung entlang der Kapillare und dem Querschnitt der Kapillare kann die Schubspannung und das Schergefälle und somit die Viskosität bestimmt werden. Weil das Schergefälle sowohl vom Beschickungsdruck wie auch vom Querschnitt der Kapillare abhängt, können durch das Ändern dieser Grössen Messungen bei verschiedenen Schergefällen durchgeführt werden.

Aus der US-GS-3 438 158 ist es beispielsweise bekannt, die Fliessspannung und die Viskosität eines nicht-newtonschen Fluids zu bestimmen. Hierbei wird das Fluid durch ein Rohr bekannten Durchmessers mit bekannter Strömungsgeschwindigkeit hindurchgepumpt. Durch wiederholtes Messen der Druckdifferenzen bzw. des Druckabfalls entlang einer gegebenen Rohrlänge unter jeweils verschiedenen Bedingungen können dann die oben genannten rheologischen Parameter bestimmt werden.

Aus der DE 10 2005 032 367 A1 ist bereits ein Verfahren zum Überwachen und/oder Regeln der Schmelzebefüllung von zumindest einer Kavität einer Spritzgiessmaschine bekannt. Nach dieser Druckschrift können Material- bzw. Viskositätsschwankungen indirekt ermittelt, überwacht und geregelt werden, und zwar indem die Füllzeitunterschiede der Schmelze von Zyklus zu Zyklus analysiert werden. Mit einem derartigen Verfahren können zwar Viskositätsunterschiede erkannt und ggf. korrigiert werden, jedoch ein echter Viskositätsverlauf in der physikalischen Einheit Pascal pro Sekunde (Pa s) kann damit nicht ermittelt werden. Doch um eine Viskositätsänderung quantifizieren zu können, muss diese in der echten physikalischen Einheit bekannt sein.

In der klassischen Rheometrie wird die Viskosität als Quotient aus Schubspannung und Schergeschwindigkeit üblicherweise zur Materialbestimmung im Labor ermittelt. Hierzu dienen so genannte Rheometer, welche eine Düse und einen genau definierten Schmelzekanal zur Ermittlung der Viskosität besitzen, wobei hier - im Gegensatz zu einem Spritzgiessprozess - isotherme Bedingungen herrschen. Das heisst, sowohl die Düse aus Metall als auch die Kunststoffschmelze weisen die gleiche Temperatur auf.
Zur Messung dienen bei einem Rheometer zwei Schmelzedruck-Sensoren (keine Werkzeuginnendruck-Sensoren), die in einem bestimmten Abstand angeordnet sind und die den Druckabfall über diese Distanz messen. Über die Geometrie des Schmelzkanals, der beispielsweise als Bohrung oder als Rechteckkanal ausgelegt sein kann, und über den Druckabfall kann dann die Schubspannung berechnet werden. Dabei kann die durch die Düse ausgespritzte Schmelze mit unterschiedlichen Geschwindigkeiten oder unter unterschiedlichen Drücken ausgepresst (extrudiert) werden, sodass sich verschiedene Druckgefälle (Δ p) ergeben. Jedes einzelne Druckgefälle ergibt eine eigene Schubspannung und somit einen Wert im Verlauf einer Viskositätskurve.

Gleichzeitig wird wiederum über die Geometrie des Schmelzekanals und über die Zeit, die vergeht, bis die Schmelze von dem ersten Schmelzedruck-Sensor zu dem zweiten Schmelzedruck-Sensor gelangt, die entsprechende Schergeschwindigkeit berechnet.

Schliesslich gibt es noch demgegenüber ein einfacheres Verfahren zur Bestimmung von Viskositäten, und zwar wird hier nur ein Schmelzedruck-Sensor verwendet. Er misst den Druckabfall vom Sensor bis zum Atmosphärendruck von 1 bar. Bei diesem Verfahren muss jedoch rechnerisch korrigiert werden - die sogenannte "Bagley-Korrektur" -, um Auslaufdruckverluste zu kompensieren. Diese Auslaufdruckverluste entstehen dann, wenn die Schmelze aus dem Kanal in das Freie tritt und sich ausweitet. Ansonsten entspricht das weitere Vorgehen dem Verfahren eines Rheometers.

Ein weiteres Verfahren zum Überwachen von Spritzgiessprozessen zeigt die US 4,833,910. Dazu werden zwei Drucksensoren in einem bekannten Abstand in der Fliessrichtung der Schmelze in einem Heisskanal positioniert. Der eine Drucksensor setzt beim Ankommen der Schmelze einen Pulsgenerator in Gang, der andere Drucksensor ermittelt über zwei Druckstifte bestimmte Spannungsunterschiede, wobei hierzu die entsprechenden Werte konvertiert werden müssen. Über die so ermittelte Druckdifferenz, Zeitdifferenz, den Radius des Kanals und den Abstand zwischen den beiden Sensoren wird die Viskosität bestimmt.

### AUFGABE DER ERFINDUNG

Aufgabe der vorliegenden Erfindung ist es, einen Spritzgiessprozess praxisnah zu überwachen und ggf. zu regeln.

### LÖSUNG DER AUFGABE

Zur Lösung dieser Aufgabe führen die kennzeichneten Merkmale von Anspruch 1.

Nach Massgabe der vorliegenden Erfindung lässt sich das erfindungsgemässe Verfahren nach einem ersten bevorzugten Ausführungsbeispiel dadurch in einfacher Weise verwirklichen, indem die Viskosität anhand von mindestens einem Werkzeuginnendruck-Sensor und mindestens einem Werkzeugwandtemperatur-Sensor ermittelt wird. Es wird einmal der Druck der Schmelze beim Eintreffen am Werkzeuginnendruck-Sensor und zum anderen beim Eintreffen am Werkzeugwandtemperatur-Sensor ermittelt. Der Druckverlust entspricht hier genau dem Druckwert, der zum Zeitpunkt eines Temperaturanstiegs vorherrscht, sodass ein zweiter Druckwert nicht erforderlich ist, da die Druckdifferenz zwischen dem Atmosphärendruck und diesem Wert angenommen wird. Zur Ermittlung der Scherspannung wird die Zeit herangezogen, welche die Schmelze zwischen den beiden Sensoren benötigt.

Hierbei ist es zweckmässig, wenn der Werkzeuginnendruck-Sensor in der Nähe des Schmelzeeintritts in die Kavität und der Werkzeugwandtemperatur-Sensor im folgenden Verlauf des Fliessweges oder in der Nähe des Fliesswegendes der Schmelze vorgesehen werden. Sitzt z. B. der Werkzeugwandtemperatur-Sensor in der Nähe des Fliesswegendes, so kann er gleichzeitig auch zu einem automatischen Umschalten auf den sogenannten Nachdruck verwendet werden, wogegen aber bei einer Positionierung des Werkzeugwandtemperatur-Sensors irgendwo im Verlauf des Schmelzeflusses das erfindungsgemässe Verfahren ebenfalls bestens funktioniert.

Wenn in der vorliegenden Erfindung von dem Werkzeugwandtemperatur-Sensor bzw. dem Werkzeuginnendruck-Sensor gesprochen wird, so bedeutet dies, dass beide Sensoren bevorzugt in der Innenwand oder nahe an der Oberfläche der Kavität der Kavität angeordnet sind, d.h. im ersten Fall kommen sie direkt mit der Schmelze in Berührung, im zweiten Fall werden sie nur durch einen dünnen Steg von der Schmelze getrennt.

Es soll nochmals ausdrücklich darauf hingewiesen werden, dass die vorliegende Erfindung nicht den Rheometer ersetzt. Im Gegensatz zur Bestimmung der Viskosität mit dem Rheometer erfolgt nach der vorliegenden Erfindung eine permanente Überwachung des Spritzgiessprozesses. Es wird ein Viskositätswert überwacht, erst wenn sich dieser ändert, wird verfahrensmässig reagiert, dass nämlich bspw. wieder zu diesem Viskositätswert zurückgefunden wird.

### FIGURENBESCHREIBUNG

Weitere Einzelheiten und Vorteile der Erfindung ergeben sich aus der nachfolgenden Beschreibung sowie anhand der Zeichnung; darin zeigt:
Fig. 1 eine schematische Seitenansicht einer erfindungsgemässen Spritzgiessmaschine,
Fig. 2 als erstes Ausführungsbeispiel ein prinzipieller Aufbau einer mit Messsensoren versehenen Kavität eines Spritzgiesswerkzeugs, und zwar mit einem Werkzeuginnendruck-Sensor und einem Werkzeugwandtemperatur-Sensor,
Fig. 2a eine schematische Darstellung verschiedener Anordnungen von Druck- bzw. Temperatursensoren in einer Kavität mit dazugehörigen Schaubildern der Druck- und Temperaturverläufe über der Zeit;
Fig. 3 ein Schaubild des Druck- und Temperaturverlaufs über der Zeit, welches aufgrund der mit dem ersten Ausführungsbeispiel gemäss Fig. 2 ermittelten Messdaten erstellt wurde,
Fig. 4 als zweites Ausführungsbeispiel eine schematische Darstellung einer Kavität eines Spritzgiesswerkzeugs mit nur einem Werkzeugwandtemperatur-Sensor, was nicht Gegenstand der Erfindung ist.

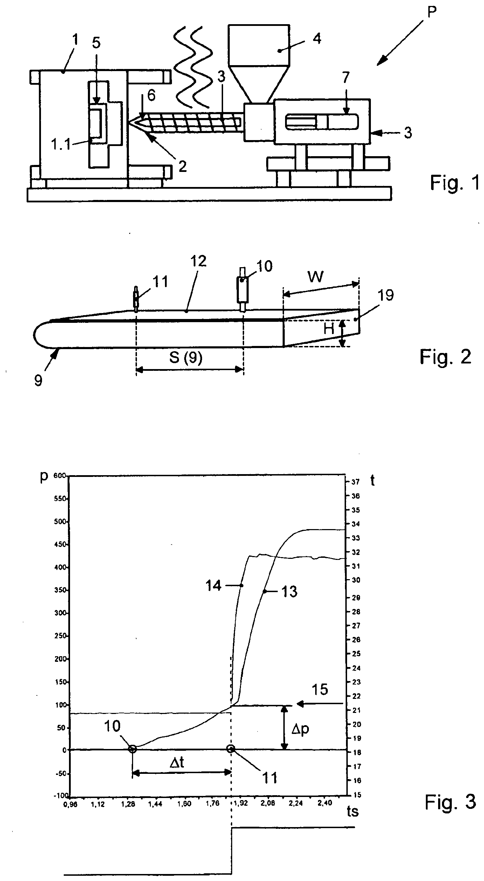

In Fig. 1 ist eine Spritzgiessmaschine P schematisch dargestellt, die in bekannter Weise ein Spritzgiesswerkzeug 1 mit einer Kavität 1.1 und einer Düse 2, durch welche eine Schmelze aus Kunststoffmaterial in die Kavität 1.1 eingebracht wird, umfasst. Die Düse 2 ist wiederum mit einem Extruder 3 verbunden, dem ein Einfülltrichter 4 für Kunstoffgranulat zugeordnet ist.

Durch einen Pfeil 5 ist eine Messstelle zum Messen der Werkzeugwand-Temperatur - und zwar der Innenwandtemperatur der Kavität - angedeutet, wogegen mit einem Pfeil 6 diejenige Stelle angegeben ist, wo im Spritzdüsenbereich der Schmelzedruck gemessen wird. Ferner ist mit einem Pfeil 7 diejenige Stelle angegeben, wo der Hydraulikdruck als Messgrösse massgebend ist.

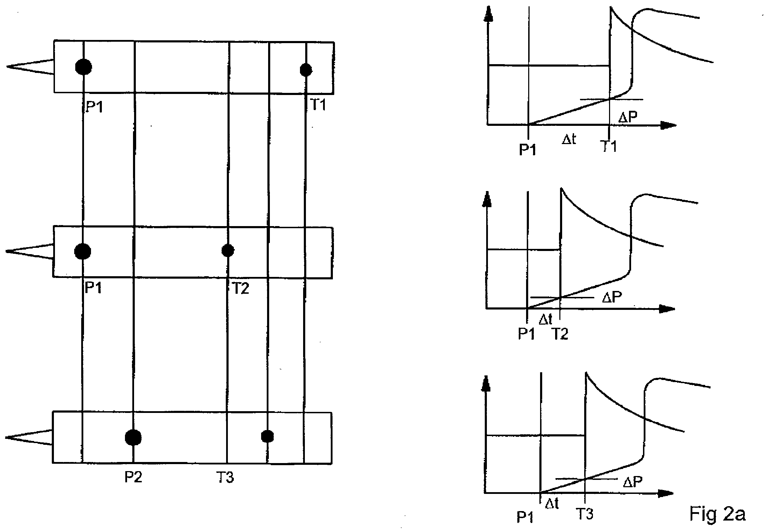

Der in Fig. 2 als erstes Ausführungsbeispiel dargestellte prinzipielle Aufbau einer Kavität 9 mit einem rechteckförmigen Querschnitt mit den Massen Höhe H und Weite W zur Bestimmung der jeweiligen Geometrie ist nur beispielhaft. Es ist ein Werkzeuginnendruck-Sensor 10 nahe einem Anschnitt 19 und in einem Abstand S (9) von diesem ein Werkzeugwandtemperatur-Sensor 11 vorgesehen, wobei eine mit 12 angedeutete Werkzeugwand "kalt" und das Innere der Kavität 9 beim Einfüllen der Schmelze "warm" ist.

Das in Fig. 3 gezeigte Schaubild wurde aufgrund von Messdaten erstellt, die mit der Anordnung von Sensoren in der Kavität 9 gemäss Fig. 2 ermittelt worden sind. Dabei ist auf der Abszisse die Zeit tₛ in Sekunden und auf der linken Ordinate der Druck p und auf der rechten Ordinate die Temperatur (abstrakt) angegeben, wobei eine Kurve 13 den Werkzeuginnendruckverlauf und eine Kurve 14 den Werkzeugwandtemperaturverlauf wiedergibt. An einem Schnittpunkt der beiden Kurven wird durch einen Pfeil 15 der Druckwert zum Zeitpunkt des Temperaturanstiegs angegeben, d.h. es erfolgt eine automatische Berechnung einer Schubspannung aufgrund Δp. Die automatische Berechnung einer Schergeschwindigkeit erfolgt aufgrund Δt.

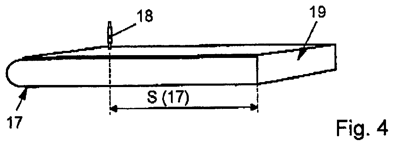

Als zweites Ausführungsbeispiel ist in Fig. 4 eine Kavität 17 schematisch dargestellt, die nur einen Werkzeugwandtemperatur-Sensor 18 aufweist, der in einem Abstand S (17) von dem Schmelzeeintritt (Anschnitt 19) angeordnet ist.

Das erfindungsgemässe Verfahren zur Ermittlung des Viskositätsverlaufs einer Schmelze in einer Kavität eines Spritzgiesswerkzeugs einer Spritzgiessmaschine zu dessen Überwachung, Dokumentierung und/oder Regelung läuft wie folgt ab:
Ausgehend von dem ersten Ausführungsbeispiel gemäss Fig. 2 wird während der Einspritzphase der in die Kavität 9 über die Düse 2 der Spritzgiessmaschine P fliessenden Schmelze deren Viskosität dadurch bestimmt, indem die einzelnen Quotienten hierfür aus den jeweiligen Schubspannungen und Schergeschwindigkeiten anhand der in der Kavität 9 vorliegenden Druckdifferenzen und der Geometrie (H x W x Gesamtlänge der Kavität 9) ermittelt werden. Bezogen auf das Ausführungsbeispiel gemäss Fig. 2 bedeutet dies, dass der Werkzeuginnendruck-Sensor 10 in der Nähe des Schmelzeeintritts beim Eintreten der Schmelze den Druck misst. Sobald die Schmelze den Werkzeugwandtemperatur-Sensor 11 erreicht, erfolgt wieder eine Druckmessung und der gemessene Druckunterschied entspricht genau dem Druckwert, der zum Zeitpunkt des in Fig. 3 gezeigten Temperaturanstiegs vorherrscht. Ein zweiter Druckwert ist hierbei nicht notwendig, da die Druckdifferenz zwischen dem Atmosphärendruck (1 bar) und diesem Wert angenommen wird. Der Vorteil dieses Verfahrens liegt auch darin, dass der Temperatursensor 11 gleichzeitig zum automatischen Umschalten auf Nachdruck verwendet werden kann. Im übrigen kann aber der Temperatursensor 11 irgendwo im Verlauf des Schmelzeflusses sitzen. Dies wird insbesondere durch Figur 2a verdeutlicht, bei der in drei Ausführungsbeispielen eine unterschiedliche Anordnung von Drucksensor 10 und Temperatursensor 11 gezeigt ist. Daneben befinden sich die entsprechenden Schaubilder analog Figur 3. Gleichgültig wo Drucksensor 10 bzw. Temperatursensor 11 sitzt, wird bei Erreichen des Temperatursensors 11 die Schubspannung Δp und die Schergeschwindigkeit Δt ermittelt und daraus der Viskositätswert errechnet. Liegt dieser Wert bei oder nahe bei einem vorgegebenen Wert, braucht für das Spritzgiessverfahren nichts geändert zu werden. Ändert sich allerdings dieser Wert, so kann das Spritzgiessverfahren bspw. in Bezug auf die Temperatur der Schmelz und/oder des Druck od. dgl. Parameter geändert werden, bis wieder der gewünschte Viskositätswert ermittelt wird.

Der Viskositätsverlauf ergibt sich schliesslich aus den verschiedenen einzelnen Schubspannungen und Schergeschwindigkeiten.

Insbesondere hat sich das erste Ausführungsbeispiel in der Praxis bewährt. Hierbei wird die Viskosität wie angegeben ermittelt und in bekannter Weise überwacht, wobei der so ermittelte Viskositätenverlauf gleichzeitig auch dokumentiert und geregelt werden kann.

Grundsätzlich sind unterschiedliche Viskositäten unerwünscht, da sie zu unterschiedlichen Teileeigenschaften führen. Ursachen für unterschiedliche Viskositäten sind entweder unterschiedliche Prozessbedingungen oder unterschiedliche Materialeigenschaften (Chargenschwankungen). Es ist deshalb auch möglich, das erfindungsgemässe Verfahren und die Vorrichtung für Materialeingangsprüfungen zu verwenden.

## Patentansprüche

1. Verfahren zum Überwachen, Dokumentieren und/oder Regeln einer Spritzgiessmaschine (P) mit einem Spritzgiesswerkzeug (1), in das eine Schmelze eingeführt wird, wobei eine Viskosität der Schmelze in dem Spritzgiesswerkzeug (1) direkt durch die jeweiligen Quotienten aus Schubspannung und Schergeschwindigkeit anhand von Druckdifferenzen (Δp), der Geometrie der Kavität (1.1; 9; 17; 20) und der Fliessgeschwindigkeit (Δt) der Schmelze ermittelt wird,
**dadurch gekennzeichnet,**
**dass** die Viskosität durch mindestens einen Werkzeuginnendruck-Sensor (10) und mindestens einen Werkzeugwandtemperatur-Sensor (11) ermittelt wird, wobei für die Scherspannung die Druckdifferenz (Δp) des von dem Werkzeuginnendruck-Sensors (10) beim Eintreffen der Schmelze ermittelten Drucks bei ihm und beim Ankommen der Schmelze beim Werkzeugwandtemperatur-Sensor (11) und für die Ermittlung der Fliessgeschwindigkeit die Zeit (Δt) herangezogen wird, welche die Schmelze vom Werkzeuginnendruck-Sensor (10) zum Werkzeugwandtemperatur-Sensor (11) benötigt.

2. Spritzgiessmaschine (P), die Steuerungsmittel aufweist, die zur Durchführung des Verfahrens nach Anspruch 1 eingerichtet sind, mit einem Spritzgiesswerkzeug (1), in das eine Schmelze eingeführt wird, wobei eine Viskosität der Schmelze in dem Spritzgiesswerkzeug (1) direkt durch die jeweiligen Quotienten aus Schubspannung und Schergeschwindigkeit anhand von Druckdifferenzen (Δp), der Geometrie der Kavität (1.1; 9; 17; 20) und der Fliessgeschwindigkeit (Δt) der Schmelze ermittelt wird, wobei mindestens ein Werkzeuginnendruck-Sensor und ein Werkzeugwandtemperatur-Sensor (10, 11, 18, 21, 22) vorgesehen sind, durch die während einer Einspritzphase der Schmelze in die Kavität (1.1, 9, 17, 20) ermittelbare Druckdifferenzen und durch die Geometrie der Kavität (1.1, 9, 17, 20) die jeweiligen Quotienten für die Viskosität aus den jeweiligen Schubspannungen und Schergeschwindigkeiten bestimmbar sind.

3. Spritzgiessmaschine nach Anspruch 2, wobei der Werkzeuginnendruck-Sensor (10) in der Nähe des Schmelzeeintritts (19) in die Kavität (9) und der Werkzeugwandtemperatur-Sensor (11) im folgenden Verlauf des Fliesswegs (S9) der Schmelze vorgesehen sind.

4. Spritzgiessmaschine nach Anspruch 2 oder 3, wobei der Werkzeugwandtemperatur-Sensor (11) in der Nähe des Fliesswegendes der Schmelze vorgesehen ist.

## Claims

1. Method for monitoring, documenting and/or controlling an injection moulding machine (P) having an injection mould (1) into which a melt is introduced, a viscosity of the melt in the injection mould (1) being ascertained directly by way of the respective quotients of shear stress and shear rate on the basis of pressure differences (Δp), the geometry of the cavity (1.1; 9; 17; 20) and the flow rate (Δt) of the melt,
**characterized in that**
the viscosity is ascertained by at least one mould internal pressure sensor (10) and at least one mould wall temperature sensor (11), the pressure difference (Δp) of the pressure ascertained by the mould internal pressure sensor (10) at it when the melt arrives being used for the shear stress, and the time (Δt) that the melt needs to pass from the mould internal pressure sensor (10) to the mould wall temperature sensor (11) being used for ascertaining the flow rate.

2. Injection moulding machine (P) which has control means which are specified for carrying out the method according to Claim 1, having an injection mould (1) into which a melt is introduced, a viscosity of the melt in the injection mould (1) being ascertained directly by way of the respective quotients of shear stress and shear rate on the basis of pressure differences (Δp), the geometry of the cavity (1.1; 9; 17 20) and the flow rate (Δt) of the melt, wherein provided are at least one mould internal pressure sensor and one mould wall temperature sensor (10, 11, 18, 21, 22) by way of which the pressure differences that can be ascertained during a phase of injecting the melt into the cavity (1.1, 9, 17, 20) and, by way of the geometry of the cavity (1.1, 9, 17, 20), the respective quotients for the viscosity can be determined from the respective shear stresses and shear rates.

3. Injection moulding machine according to Claim 2, wherein the mould internal pressure sensor (10) is provided in the vicinity of the entry (19) of the melt into the cavity (9), and the mould wall temperature sensor (11) is provided in the following course of the flow path (S9) of the melt.

4. Injection moulding machine according to Claim 2 or 3, wherein the mould wall temperature sensor (11) is provided in the vicinity of the end of the flow path of the melt.

## Revendications

1. Procédé pour surveiller, documenter et/ou réguler une presse d'injection (P) comprenant un moule d'injection (1) dans lequel est introduite une masse en fusion, une viscosité de la masse en fusion dans le moule d'injection (1) étant déterminée directement par les quotients respectifs de la contrainte de cisaillement et de la vitesse de cisaillement à l'aide de différences de pression (Δp), de la géométrie de la cavité (1.1 ; 9 ; 17 ; 20) et de la vitesse d'écoulement (Δt) de la masse en fusion,
**caractérisé en ce que**
la viscosité est déterminée par au moins un capteur de pression intérieure de moule (10) et au moins un capteur de température de paroi de moule (11), la différence de pression (Δp) entre la pression déterminée par le capteur de pression intérieure de moule (10) à l'arrivée de la masse en fusion à ce dernier et celle à l'arrivée de la masse en fusion au capteur de température de paroi de moule (11) étant utilisée pour la contrainte de cisaillement, et le temps (Δt) nécessaire à la masse en fusion pour aller du capteur de pression intérieure de moule (10) au capteur de température de paroi de moule (11) étant utilisé pour déterminer la vitesse d'écoulement.

2. Presse d'injection (P) comportant les moyens de commande qui sont conçus pour mettre en œuvre le procédé selon la revendication 1, ladite presse d'injection comprenant un moule d'injection (1) dans lequel est introduite une masse en fusion, une viscosité de la masse en fusion dans le moule d'injection (1) étant déterminée directement par les quotients respectifs de la contrainte de cisaillement et de la vitesse de cisaillement à l'aide des différences de pression (Δp), de la géométrie de la cavité (1.1 ; 9; 17 ; 20) et de la vitesse d'écoulement (Δt) de la masse en fusion, au moins un capteur de pression intérieure de moule et un capteur de température de paroi de moule (10, 11, 18, 21, 22) étant prévus pour déterminer des différences de pression pendant une phase d'injection de la masse en fusion dans la cavité (1.1 ; 9, 17, 20) et, par la géométrie de la cavité (1.1 ; 9, 17, 20), les quotients respectifs pour la viscosité à partir des contraintes de cisaillement et des vitesses de cisaillement respectives.

3. Presse d'injection selon la revendication 2, le capteur de pression intérieure de moule (10) étant prévu à proximité de l'entrée de la masse en fusion (19) dans la cavité (9) et le capteur de température de paroi de moule (11) étant prévu dans la suite du trajet d'écoulement (S9) de la masse en fusion.

4. Pression d'injection selon la revendication 2 ou 3, le capteur de température de paroi de moule (11) étant prévu à proximité de la fin du trajet d'écoulement de la masse en fusion.
